## Europäisches Patentamt

## European Patent Office

## Office européen des brevets

(11) Veröffentlichungsnummer: **0 274 083**
B1

(12)

# EUROPÄISCHE PATENTSCHRIFT

(45) Veröffentlichungstag der Patentschrift:
**18.04.90**

(21) Anmeldenummer: **87118371.1**

(22) Anmeldetag: **11.12.87**

(51) Int. Cl.⁴: **C02F 1/24**, A01K 63/04,
B03D 1/26

(54) **Begasungs/Flotationsreaktor.**

(30) Priorität: **22.12.86  DE 3643931**

(43) Veröffentlichungstag der Anmeldung:
**13.07.88 Patentblatt 88/28**

(45) Bekanntmachung des Hinweises auf die Patenterteilung:
**18.04.90 Patentblatt 90/16**

(84) Benannte Vertragsstaaten:
**AT BE CH DE FR GB LI NL**

(56) Entgegenhaltungen:
**DE-A- 1 517 911**

(73) Patentinhaber: **Forschungszentrum Jülich GmbH,
Postfach 1913, D-5170 Jülich(DE)**

(72) Erfinder: **Overath, Horst, Bastionstrasse 9,
D-5170 Jülich(DE)**

## Beschreibung

Die Erfindung bezieht sich auf einen Begasungs/Flotations-Reaktor insbesondere für Biomasse enthaltende Flüssigkeit mit einem Schaumrohr mit oberem Auffangbecher sowie einem unteren Einleitungsraum für Flüssigkeit und Gas in Form feiner Blasen.

Begasung und Flotation von biomassehaltigen Flüssigkeiten können in unterschiedlichen Bereichen der Biotechnologie eine Rolle spielen. Ein spezielles Beispiel ist die Abwasserbehandlung von Meerwasseraquarien, auf die hier besonders Bezug genommen wird.

Bei solchen Aquarien wird dem Wasser durch die Fütterung ständig eiweißhaltige Substanz zugeführt, deren Abbau durch Mikroorganismen über längere Zeit hinweg zu einer Anreicherung von speziell für empfindliche Meerestiere schädlichem Nitrat führt.

Eine Möglichkeit, den Nitratgehalt niedrig zu halten besteht in der denitrifizierenden Behandlung des Wassers in einem rotierenden Festbettreaktor, wie er in der Deutschen Patentanmeldung DE-A 3 608 466 vom 14.03.1986 der Anmelderin beschrieben ist. Das in einem solchen Reaktor denitrifizierte Wasser kann nun jedoch nicht ohne Nachbehandlung wieder in das Aquarium zurückgeleitet werden, da es

- keinen lebenswichtigen Sauerstoff enthält,
- mit wassertrübender Biomasse durchsetzt ist,
- ein Redoxpotential von - 220 mV (Sollwert + 200 bis + 230 mV) aufweist und
- eventuell Nitrit enthält, das bereits in geringen Konzentrationen (ab 1 mg/l) äußerst giftig ist.

Der erfindungsgemäße Begasungs/Flotations-Reaktor bezweckt daher eine Nachbehandlung des Wassers, das soweit mit Sauerstoff beladen und von Biomasse sowie Nitrit befreit wird, daß es erneut in das Aquarium eingeleitet werden kann.

Zu diesem Zweck ist der erfindungsgemäße Begasungs/Flotations-Reaktor der Eingangs genannten Art dadurch gekennzeichnet, daß das Schaumrohr ein den Einleitungsraum abschließendes axiales Steigrohr aufweist, über welches das konzentrische Schaumrohr übergreift bzw. übergestülpt ist, dessen unteres trichterförmig erweitertes Ende in den unteren Bereich eines Mantelrohres einmündet, dessen oberes Ende über zumindest ein Rückführungsrohr mit dem Einleitungsraum unter dem axialen Steigrohr in Verbindung steht und das einen T-förmigen Flüssigkeitsauslaß aufweist mit einem Tauchstutzen, der unter den Flüssigkeitsspiegel reicht unter einer Auslaßhöhe unmittelbar über dem Abzweig des Rückführungsrohres, wobei das obere Ende des Schaumrohres teleskopartig verlängerbar ist.

Zwar ist ein Schaumrohr mit Absetzbecher und unterem Einleitungsraum bereits aus "Zeitschrift des Kölner Zoo" 22 (1979) 69 - 72 bekannt, jedoch ist diese Anordnung in ihrer Wirkungsweise nicht effektiv genug, als daß die vorstehende Forderung erfüllt werden könnte.

Besondere Ausgestaltungen der Erfindung gehen aus den Unteransprüchen hervor.

Nachfolgend wird die Erfindung anhand eines Ausführungsbeispiels unter Bezugnahme auf die angefügten Zeichnungen beschrieben: es zeigen:

Figur 1 einen Begasungs/Flotations-Reaktor im Längsschnitt und

Figuren 2 und 3 zwei Querschnitte längs A-A durch einen mit Leitrippen versehenen Reaktor

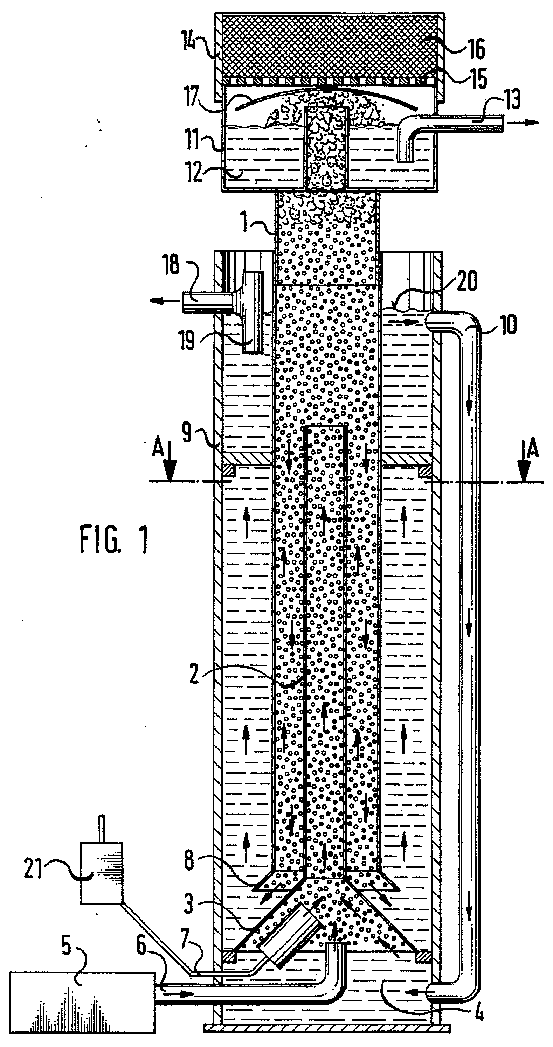

Figur 1 zeigt ein Schaumrohr (1) mit einem inneren Steigrohr (2), dessen trichterförmige Verlängerung (3) einen Einleitungsraum (4) abgrenzt, in den von einer schematisch angedeuteten Denitrifikation (5) herkommende Flüssigkeit über einen Zulauf (6) eingeleitet wird. Über einen oder mehrere Gasverteiler (7), die insbesondere durch Lindenholzausströmer gebildet werden, wird ein Luft-Ozongemisch (herkommend vom schematisch mit 21 angedeuteten Ozonisator) feinstblasig in die Flüssigkeit innerhalb des Trichters (3) zugeführt. Als Ozonisator dient z. B. ein Gerät der Fa. Sander, Elze (BRD) für wäßrigen Bereich. Der $O_3$-Anteil wird so gesteuert, daß noch keine Denaturierung von vorhandenem Eiweiß auftritt.

Im Steigrohr (2) steigen Gas und Flüssigkeit nach dem Luftheberprinzip aufwärts und gelangen in das Schaumrohr, in dem sich nach oben zu eine Schaumsäule aufbaut, während gleichzeitig eine Abwärtsströmung in dem das Steigrohr umgebenden Abschnitt stattfindet, mit der die Gasblasen abwärtswandern bis zu dem als "Sogentspannungskonus" bezeichneten trichterförmigen Ende (8) in dem die Strömung soweit verlangsamt wird, daß eine Blasenumkehr stattfindet. Das nunmehr wieder aufwärtsströmende Gas begegnet den abwärtsbewegten Blasen, was zu einer kräftigen Durchwirbelung Anlaß gibt, wodurch die Verweilzeit des Gases in der Flüssigkeit erhöht und die Auflösung des Gases im Wasser begünstigt wird. D. h. zwischen Steigrohr und Schaumrohr findet eine turbulente Bewegung der Blasen in beiden Richtungen (sowohl aufwärts als auch abwärts) statt.

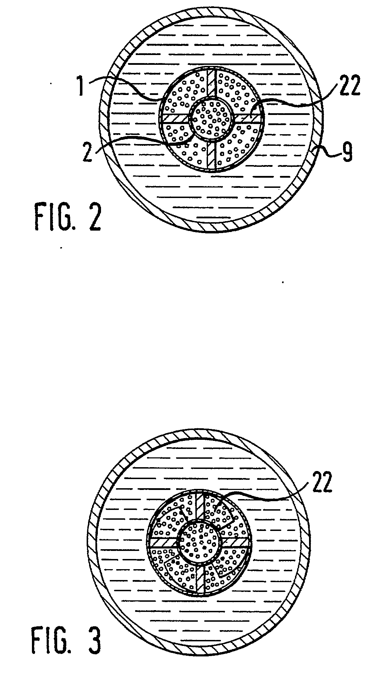

Zwischen Steigrohr und Schaumrohr können als Leitrippen 22, wie durch Figuren 2 und 3 angedeutet wird, gegebenenfalls gewundene Längsrippen vorgesehen sein, die zu einer Verlängerung der Strömungswege führen.

Die das trichterförmige Ende verlassende blasenfreie Flüssigkeit strömt im Mantelrohr (9) aufwärts und gelangt über das Rückführungsrohr (10) wieder in den Einleitungsraum (4) zurück. Diese Rückführung dient der möglichst effektiven Aufsättigung der Flüssigkeit mit Sauerstoff, wodurch eine Anhebung des Redoxpotentials von - 220 auf + 200 bis + 230 mV erreicht werden kann. Diese Rückführung erfolgt je nach Luftzufuhr und Zufuhr von aufzubereitendem Wasser ca. 60 - 100 mal/h. Im Zulaufwasser enthaltenes Nitrit ist dann zu Nitrat aufoxidiert. Gleichzeitig wird durch diese Rückführung auch dem Biomassenschlupf der Flotation entgegengewirkt. Bei bekannten Vorrichtungen ist dagegen ein Teil der im zu behandelnden Wasser vorhandenen eiweißhaltigen Substanzen noch im Ablauf enthalten (Schlupf).

Im Raum zwischen Mantelrohr (9) und Schaumrohr (1) können Füllkörper mit Filter- und Adsorberwirkung oder auch mit Mikroorganismen (z. B. aeroben Bakterien) bewachsene Trägerkörper vorgesehen sein, die eine zusätzliche Reinigungswirkung entfalten können.

Das obere Ende des Schaumrohrs (1) ist in seiner Länge teleskopartig verlängerbar zur Anpassung an den Auffangbecher (11), in dem sich die Biomasse (12) sammelt, die über den Ablauf (13) mit einem nach unten abgebogenen Rohr abgegeben werden kann. Auf dem Auffangbecher (11) befindet sich ein abnehmbarer Siebaufsatz (14) mit unterem Sieb (15) und Aktivkohleschicht (16) über die die ozonhaltige Luft abgegeben wird, wodurch das Ozon katalytisch zerstört wird.

Unter dem Sieb (15) ist vorzugsweise eine gewölbte Platte (17) angeordnet, die einen Übertritt von Biomasse in das Sieb hinein verhindert.

Belüftete und von Biomasse befreite Flüssigkeit verläßt das Mantelrohr (9) über den Flüssigkeitsauslaß (18), dessen unterer Tauchstutzen (19) unter die Flüssigkeitsoberfläche reicht, wodurch ein Mitreißen von Gas und aufschwimmender Biomasse verhindert wird.

Je nach Luftdosierung baut sich über dem Flüssigkeitsspiegel (20) eine Luft-Wassersäule innerhalb des Schaumrohres (1) auf. Die Höhe dieser Säule ist abhängig von

- der zugeführten Luftmenge,
- Querschnitt und der Länge des inneren Steigrohres (2),
- Querschnitt und der Länge des Schaumrohres (1),
- der Oberflächenspannung des zu behandelnden Wassers,
- der Belastung mit Biomasse,
- der Ozonzufuhr,
- dem Luftblasenquerschnitt.

Da beim Betrieb ständig Wasser nachgefördert wird, und dieses das Schaumrohr (1) nicht nach oben hin verlassen kann, entsteht an der Oberkante des inneren Steigrohres (2) ein Druck, der ausreicht, einen Teilstrom des geförderten Wassers durch das Schaumrohr (1) nach unten zu leiten. Dieser Druck ist abhängig von der geförderten Wassermenge und der im Schaumrohr aufstehenden Luft-Wassersäule. Gleichzeitig werden die im Wasser befindlichen Luft-Ozon-Blasen mit dem nach unten fließenden Wasser bis zum trichterförmigen Ende (8) gesogen, und steigen von dort wieder auf.

Die im Wasser enthaltene Biomasse lagert sich während der Belüftung an die Luft-Ozon-Blasen an und steigt bis in die Luft-Wassersäule. Je nach Einstellung der vorstehend genannten Parameter bildet sich ein mehr oder weniger fester Biomasseschaum (Flotation) im obersten Teil der Luft-Wassersäule. Dieser wird dann von der entweichenden Luft in den Auffangbecher (11) gedrückt. Dort verflüssigt sich die Biomasse und wird über den Ablauf (13) abgeleitet. Dieser ragt mit der Ablauföffnung in die abflotierte Biomasse und verhindert, daß ozonhaltige Luft über ihm entweichen kann. Dies muß zwangsläufig über die dem Auffangbecher (11) liegende Aktivkohleschicht (16) passieren und wird hier zerstört.

Die vorstehend beschriebene Anordnung zeichnet sich durch eine hohe Effektivität hinsichtlich der Aufsättigung der behandelten Flüssigkeit mit Gas (Sauerstoff) und eine gute Abtrennung von Biomasse bei geringen Betriebskosten und geringer Größe des Gerätes aus. Bei einem Laborgerät hatte das Mantelrohr eine Länge von 1010 mm und einen Durchmesser von 150 mm. Das innere Steigrohr von 40 mm Durchmesser hatte eine Länge von 820 mm (mit Trichter 910 mm). Das 70 mm lichte Schaumrohr (1) hatte eine Länge von 1065 mm bis zur Unterkante des Auffangbechers. Der Auffangbecher (11) mit abnehmbarem Siebaufsatz (14) hatte eine Höhe von 120 mm und einen Durchmesser von 100 mm. Über den Zulauf (6) wurden 20 l/h Flüssigkeit eingeleitet.

Rückführungsrohr (10) und Flüssigkeitsauslaß (18) hatten eine lichte Weite von 32 mm. Die beschriebene Anordnung diente zur Nachbehandlung von denitriertem Wasser für ein Meerwasseraquarium. Selbstverständlich sind weit größere Ausführungen (z. B. für 1000 l/h) oder auch kleinere Varianten je nach Bedarf ausführbar.

Das Gerät kann auch zur Abtrennung von eiweißhaltigen Substanzen bei der aeroben Wasseraufbereitung benutzt werden oder zur Klärung von Abwasser der Fisch oder Fleisch verarbeitenden Industrie.

**Patentansprüche**

1. Begasungs/Flotations-Reaktor insbesondere für Biomasse enthaltende Flüssigkeit mit einem Schaumrohr mit oberem Auffangbecher sowie einem unteren Einleitungsraum für Flüssigkeit und Gas in Form feiner Gasblasen, **dadurch gekennzeichnet,** daß das Schaumrohr (1) ein den Einleitungsraum abschließendes axiales Steigrohr (2) aufweist, über welches das konzentrische Schaumrohr übergreift bzw. übergestülpt ist, dessen unteres trichterförmig erweitertes Ende (8) in den unteren Bereich eines Mantelrohres (9) einmündet, dessen oberes Ende über zumindest ein Rückführungsrohr (10) mit dem Einleitungsraum (4) unter dem axialen Steigrohr (2) in Verbindung steht und das einen T-förmigen Flüssigkeitsauslaß (18) aufweist mit einem Tauchstutzen (19), der unter dem Flüssigkeitsspiegel reicht und einer Auslaßhöhe unmittelbar über dem Abzweig des Rückführungsrohres (10), wobei das obere Ende des Schaumrohres (1) teleskopartig verlängerbar ist.

2. Reaktor nach Anspruch 1, **dadurch gekennzeichnet,** daß der Auffangbecher (11) in einem insbesondere abnehmbaren mit Aktivkohle (16) gefüllten Siebaufsatz (14) endet.

3. Reaktor nach Anspruch 2, **gekennzeichnet durch** eine nach unten gewölbte, den Querschnitt weitgehend einnehmende, mit der Siebplatte (15) verbundene Scheibe (17) unter dem Siebaufsatz (14).

4. Reaktor nach einem der vorangehenden Ansprüche, **gekennzeichnet durch** insbesondere mit Mikroorganismen bewachsene Füllkörper zwischen Schaumrohr (1) und Mantelrohr (9).

5. Reaktor nach einem der vorangehenden Ansprüche, **gekennzeichnet durch** einen elektrischen Ozonisator (21) in der Gaseinleitungsstrecke.

6. Reaktor nach einem der vorangehenden Ansprüche, **gekennzeichnet durch** Leitrippen (22) zwischen dem Steigrohr (2) und dem Schaumrohr (1).

## Claims

1. Reactor for flotation or treatment with gases, especially for biomass-containing liquid, with a foam tube with upper collecting tank and a lower entry chamber for liquid and gas in the form of fine gas bubbles, characterised in that the foam tube (1) has an axial riser tube (2) which closes the entry chamber and over which there extends or is fitted the concentric foam tube whose lower end, widened in funnel-shaped manner, opens into the lower region of a casing tube (9) whose upper end communicates via at least one return pipe (10) with the entry chamber (4) below the axial riser tube (2), and which has a T-shaped liquid outlet (18) with an immersion strub pipe (19), which extends under the liquid surface, and an outlet height immediately above the branche-off of the return pipe (10), the upper end of the foam tube (1) being adapted to be extended telescopically.

2. Reactor according to claim 1, characterised in that the collecting tank (11) ends in a more especially detachable screen head (14) filled with activated carbon (16).

3. Reactor according to claim 2, characterised by a downwardly curved plate (17) below the screen head (14), this plate being connected to the screen plate (15) and substantially occupying the cross-section.

4. Reactor according to one of the preceding claims, characterised by filling elements carrying growths of micro-organisms especially, between the foam tube (1) and the casing tube (9)

5. Reactor according to one of the preceding claims, characterised by an electrical ozoniser (21) in the gas infeed path.

6. Reactor according to one of the preceding claims, characterised by guide ribs (22) between the riser tube (2) and the foam tube (1).

## Revendications

1. Réacteur fonctionnant par absorption de gaz et par flottation, notamment pour du liquide contenant de la biomasse, comprenant un tube à mousse ayant un godet collecteur supérieur, ainsi qu'une chambre inférieure d'admission de liquide et de gaz sous forme de fines bulles de gaz, caractérisé en ce que le tube à mousse comporte un tube ascendant (2) axial, fermant la chambre d'admission, sur lequel le tube à mousse concentrique est enfilé ou qu'il coiffe, dont l'extrémité (8) inférieure s'évasant en forme d'entonnoir débouche dans la partie inférieure d'un tube-enveloppe (9), dont l'extrémité supérieure communique, par au moins un tube de recyclage (10), avec la chambre d'admission (4) en-dessous du tube ascendant axial et qui comporte une sortie (18) en forme de T pour du liquide, qui a un embout immergé (19) allant en-dessous du niveau du liquide et qui a un niveau de sortie juste au-dessus de la dérivation du tube de recyclage (10), l'extrémité supérieure du tube à mousse (1) pouvant être prolongée télescopiquement.

2. Réacteur suivant la revendication 1, caractérisé en ce que le godet collecteur (11) se termine par une coiffe-tamis (14), notamment amovible et garnie de charbon actif (16).

3. Réacteur suivant la revendication 2, caractérisé par un disque (17) incurvé vers le bas, prenant sensiblement toute la section transversale, relié à la plaque-tamis (15) et se trouvant sous la coiffe-tamis (14).

4. Réacteur suivant l'une des revendications précédentes, caractérisé par des corps de garnissage sur lesquels croissent notamment des microorganismes, entre le tube à mousse (1) et le tube-enveloppe (9).

5. Réacteur suivant l'une des revendications précédentes, caractérisé par un ozoneur (21) électrique dans la zone d'introduction du gaz.

6. Réacteur suivant l'une des revendications précédentes, caractérisé par des nervures de guidage (22) entre le tube ascendant (2) et le tube à mousse (1).

EP 0 274 083 B1

FIG. 1

FIG. 2

FIG. 3